**Europäisches Patentamt**

**European Patent Office**

**Office européen des brevets**

(11) Veröffentlichungsnummer: **0 132 649**
**B1**

(12) **EUROPÄISCHE PATENTSCHRIFT**

(45) Veröffentlichungstag der Patentschrift:
**09.12.87**

(51) Int. Cl.⁴: **C 02 F 3/28, C 02 F 3/10**

(21) Anmeldenummer: **84107839.7**

(22) Anmeldetag: **05.07.84**

(54) Verfahren zur anaeroben biologischen Reinigung von Abwasser.

(30) Priorität: **26.07.83 DE 3326939**

(43) Veröffentlichungstag der Anmeldung:
**13.02.85 Patentblatt 85/7**

(45) Bekanntmachung des Hinweises auf die Patenterteilung:
**09.12.87 Patentblatt 87/50**

(84) Benannte Vertragsstaaten:
**AT BE CH DE FR GB IT LI NL SE**

(56) Entgegenhaltungen:
**EP - A - 0 046 901**
**CH - A - 535 184**
**DE - A - 2 621 524**
**US - A - 4 323 367**

(73) Patentinhaber: **Linde Aktiengesellschaft,**
**Abraham-Lincoln-Strasse 21, D-6200 Wiesbaden (DE)**

(72) Erfinder: **Morper, Manfred, Dr. rer. nat.,**
**Zugspitzstrasse 13/0, D-8035 Gauting (DE)**
Erfinder: **Fuchs, Uwe, Heiterwanger Strasse 46,**
**D-8000 München 70 (DE)**

(74) Vertreter: **Schaefer, Gerhard, Dr., Linde**
**Aktiengesellschaft Zentrale Patentabteilung,**
**D-8023 Höllriegelskreuth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zur anaeroben biologischen Reinigung von organischen Schmutzstoffen enthaltendem Abwasser, bei dem das zu reinigende Abwasser durch zwei hintereinander geschaltete, unter anaeroben Bedingungen betriebene Reaktoren geleitet wird, wobei die im Abwasser enthaltenen, unter anaeroben Bedingungen nur langsam metabolisierbaren, teils im ungelösten, teils im makromolekularen Zustand vorliegenden Schmutzstoffe im ersten Reaktor mit Hilfe eines im ersten Reaktor vorhandenen, eine Filterwirkung aufweisenden Mediums zurückgehalten werden, und wobei im ersten Reaktor die Verweilzeit der nur langsam metabolisierbaren Schmutzstoffe so bemessen wird, dass diese zu niedermolekularen, gelösten Bruchstücken abgebaut werden und wobei anschliessend die gelösten Bruchstücke zusammen mit den von vornherein schnell abbaubaren Schmutzstoffen dem zweiten Reaktoren zugeführt werden.

Bei bekannten Abwasserreinigungsverfahren dieser Art werden im ersten Reaktor die in einem komplexen Abwasser vorhandenen hochmolekularen, oft ungelösten Schmutzstoffe durch Hydrolyse in gelöste Bruchstücke überführt und diese zusammen mit dem im Abwasser von vornherein im gelösten vorhandenen Schmutzstoffe in einer Versäuerungsphase mit Hilfe von verschiedenen fakultativen Bakteriengruppen in kurzkettige organische Säuren, in Essigsäure, Alkohole, $H_2$ und $CO_2$ umgesetzt.

Da von diesen Zwischenprodukten nur die Essigsäure, $H_2$ und $CO_2$ direkt von Methanbakterien zu Methan umgebaut werden können, werden im zweiten Reaktor zunächst in einer acetogenen Phase die organischen Säuren und Alkohole in Essigsäure umgewandelt. In einer methanogenen Phase wird dann aus hauptsächlich Essigsäure und aus $H_2$ und $CO_2$ Methan gebildet. Die Zuordnung jeweils zweier Umwandlungsphasen zu den beiden Reaktoren ergibt sich dabei daraus, dass die Hydrolyse und Versäuerung weitgehend parallel ablaufen, während acetogene Bakterien und Methanbakterien in ihrem Stoffwechsel voneinander abhängig und daher auf einen gemeinsamen Lebensraum angewiesen sind.

Das Problem bei der Behandlung eines komplex zusammengesetzten Abwassers, das neben leicht abbaubaren, niedermolekularen und gelösten Inhaltsstoffen auch schwer abbaubare hochmolekulare und ungelöste Inhaltsstoffe enthält, besteht darin, dass die Hydrolyse der schwer abbaubaren Abwasserinhaltsstoffe nur langsam abläuft, so dass die Hydrolyse zum geschwindigkeitslimitierenden Schritt wird, da erst, wenn die fermentativen Bakterien die schwer abbaubaren Abwasserinhaltsstoffe in angreifbare Teile zersetzt haben, ein voller Abbau erfolgen kann. Dies bedingt notwendigerweise zumindest im ersten Reaktor grosse Beckenvolumen, da das gesamte Abwasser so lange im ersten Reaktor gehalten werden muss, bis die hochmolekularen, ungelösten Abwasserinhaltsstoffe in gelöste Bruchstücke überführt und zusammen mit den leicht abbaubaren Abwasserinhaltsstoffen in Essigsäure, Alkohole, $H_2$, $CO_2$ und organische Säuren, wie Buttersäure, Propionsäure, umgewandelt sind.

Aus der EP-A 46 901 ist es bekannt, Abwasser dadurch unter anaeroben Bedingungen abzubauen, dass das Abwasser zunächst durch einen mit makroporösem Trägermaterial gefüllten Reaktor geführt wird, in dem die Säurebildungsphase abläuft, und anschliessend einem zweiten Reaktor aufgegeben wird, in dem die Methanbildungsphase abläuft.

Von Nachteil bei diesem Verfahren ist die Notwendigkeit, das gesamte Abwasser durch entsprechende Dimensionierung des ersten Reaktors so lange im ersten Reaktor zu halten, bis die Säurebildung aller im Abwasser enthaltenen Schmutzstoffe abgeschlossen ist. Erst dann kann mit der Methanbildungsphase im zweiten Reaktor begonnen werden.

In der DE-A-2 621 524 wird eine zweistufige anaerobe Abwasserreinigungsanlage zur Behandlung komplex zusammengesetzten Abwassers beschrieben. Auch hier wird vorgeschlagen, die Säurebildungsphase und die Methanbildungsphase getrennt in zwei Reaktoren ablaufen zu lassen. Dies wird als Vorteil gegenüber der Behandlung in einem Reaktor angesehen.

Von Nachteil ist hierbei wiederum die Notwendigkeit, das gesamte Abwasser so lange im ersten Reaktor zu halten, bis die Säurebildung aller Schmutzstoffe abgeschlossen ist.

Der Erfindung liegt die Aufgabe zugrunde, ein Verfahren der eingangs genannten Art so auszugestalten, dass auf einfache und wirtschaftliche Weise unter Beibehaltung einer hohen Reinigungsleistung eine Verkürzung der Verweilzeit und dadurch eine Einsparung an Reaktorvolumen erzielt werden kann.

Diese Aufgabe wird erfindungsgemäss dadurch gelöst, dass die schon von vorherein im gelösten Zustand im Abwasser vorhandenen, von anaeroben Mikroorganismen schnell abbaubaren Schmutzstoffe direkt und zumindest weitgehend ohne Umwandlung in den zweiten Reaktor weitergeleitet werden, wo deren Abbau in einer Versäuerungs-, Acetat- und Methanbildungsphase erfolgt.

Mit dieser erfindungsgemässen Verfahrensweise ist die Reaktionsgeschwindigkeit der am langsamsten ablaufenden Reaktionen, nämlich die Überführung ungelöster Stoffe durch Enzyme in gelöste Stoffe sowie die Hydrolyse makromolekularer Stoffe, wie Polysaccharide, Proteine und Fette, nicht mehr bestimmend für die hydraulische Verweilzeit des gesamten Abwassers im ersten Reaktor. Statt dessen können die in leicht abbaubarer Form vorliegenden, gelösten Stoffe direkt in den zweiten Reaktor weitergeleitet werden, in dem dann bereits, während im ersten Reaktor noch die Hydrolyse der schwer abbaubaren Abwasserinhaltsstoffe abläuft, mit dem Abbau in einer Versäuerungs-, Acetat- und Methanbildungsphase begonnen werden kann. Damit können die leicht abbaubaren Abwasserinhaltsstoffe insgesamt gesehen in einer kürzeren Zeitspanne als bisher abgebaut werden. Dazu kommt, dass durch das Zurückhalten der schwer abbaubaren Schmutzstoffe mit Hilfe des eine Filterwirkung aufweisenden Mediums im ersten Reaktor gleichzeitig auch eine Aufkonzentrierung der schwer abbaubaren Abwasserinhaltsstoffe bewirkt wird, so dass das Volumen des ersten Reaktors entsprechend der erreichbaren Aufkonzentrierung verkleinert werden kann.

Wird gemäss einer vorteilhaften Ausgestaltung des Erfindungsgedankens als die Filterwirkung aufweisendes Medium ein Medium verwendet, das gleichzeitig auch als Ansiedlungsfläche für Mikroorganismen wirkt, kann das Volumen des ersten Reaktors auch noch dadurch verringert werden, dass dann die an der Umwandlung der makromolekularen, ungelösten Stoffe beteiligten Mikroorganismen in hoher Konzentration vorhanden sind. Dabei ist darauf zu achten, dass möglichst makroporöse Materialien für das eine Filterwirkung aufweisende Medium zum Einsatz kommen. Denn durch das Vorhandensein von Makroporen wird den Bakterien eine grosse Oberfläche zur Ansiedlung zur Verfügung gestellt, auf der sie sich gleichmässig und fest fixiert verteilen können. Ausserdem werden die Bakterien durch die Makroporen zu einem dezentralisierten Wachstum gezwungen. Damit ergeben sich grosse Stoffaustauschflächen, so dass die erzielbare Umbauleistung hinsichtlich der Umwandlung der makromolekularen, ungelösten Stoffe in gelöste, niedermolekulare Stoffe sehr hoch liegt. Dazu kommt, dass die Bakterien in den Makroporen vor Abrieb geschützt sind und es so beim Weiterleiten der leicht abbaubaren Abwasserinhaltsstoffe in den zweiten Reaktor kaum zu einem Ausschwemmen von Bakterienmasse aus dem ersten Reaktor kommen kann. Besteht das Filter- bzw. das Trägermedium selbst aus einzelnen Stoffteilchen, wodurch die Stoffaustauschflächen nochmals gegenüber der Verwendung von ganzen Blöcken vergrössert wird, muss zum Vermeiden des Ausschwemmens des Mediums am Ablauf des Reaktors ein Gitter oder ein Sieb vorhanden sein, dessen Maschenweite kleiner als die kleinste Stoffteilchengrösse ist.

Vorteilhafterweise wird dabei der erste Reaktor als Festbett- oder Fliessbettreaktor betrieben, da dann der Volumenanteil des im Reaktor vorhandenen Filter- bzw. Trägermediums entsprechend hoch gewählt werden kann und dadurch die Stoffaustauschflächen entsprechend gross sind. Ob ein Festbett- oder ein Fliessbettreaktor gebildet wird, hängt dabei vom spezifischen Gewicht des verwendeten Filter- bzw. Trägermediums ab, wobei selbstverständlich ein spezifisch leichteres Medium für das Zustandekommen eines Fliessbettes besser geeignet ist, allerdings auch aufgrund einer im Vergleich zum Festbett weniger dichten Packungsmöglichkeit des Mediums geringere Stoffaustauschflächen mit sich bringt. Beispielsweise kann der Volumenanteil des Mediums am Gesamtvolumen des Reaktors für die Ausbildung eines Fliessbettes 40 bis 70% und für die Ausbildung eines Festbettes 70 bis 90% betragen.

Damit dem unterschiedlichen Rückhalteverhalten unterschiedlicher Abwasserinhaltsstoffe Rechnung getragen werden kann, ist es von Vorteil, wenn das Zurückhalten der langsam metabolisierbaren Schmutzstoffe unter Verwendung mindestens zweier unterschiedlich gearteter Materialien für das eine Filterwirkung aufweisende Medium durchgeführt wird. Dabei können beispielsweise spezifisch leichtere und spezifisch schwerere Materialien oder grosse und kleine Stoffteilchen des gleichen Materials oder auch nur Stoffteilchen des gleichen Materials mit jedoch unterschiedlich grossen Poren kombiniert werden. Welche Kombination gewählt wird, hängt allein von den voraussichtlich im zu behandelnden Abwasser enthaltenen, ungelösten, makromolekularen Inhaltsstoffen ab.

Zur Verstärkung der Rückhaltewirkung ist es zweckmässig, das Zurückhalten der langsam metabolisierbaren Schmutzstoffe durch Zugabe von Flockungs- und/oder Fällungs- und/oder Adsorptionsmitteln zu unterstützen. Als Zugabemittel kommen dabei beispielsweise Eisen- oder Aluminiumhydroxid, Aktivkohle, Bentonit oder Bleicherde in Frage. Eine solche Vorgehensweise ist insbesondere dann zu empfehlen, wenn der Volumenanteil des Filter- bzw. Trägermediums am Gesamtvolumen des Reaktors verhältnismässig gering ist, beispielsweise bei Fliessbettverfahren bei denen zusätzlich zu dem im Vergleich zu Festbettverfahren verringerten Volumen des Filter- bzw. Trägermediums noch dazu durch die Strömungsgeschwindigkeit des Abwassers die Abwasserinhaltsstoffe in verstärktem Mass bewegt werden.

In Sinne einer Verkürzung der Aufenthaltszeit ist es weiterhin vorteilhaft, den zweiten Reaktor als Hochleistungsreaktor zu betreiben. Dazu kann in diesem eine Raumbelastung bis zu 30 kg $CSB/m^3$ und Tag eingehalten werden.

Das Filter- bzw. Trägermedium kann aus einem oder mehreren Blöcken eines porösen Materials oder aus einzelnen Stoffteilchen mit einem Durchmesser von 0,5 bis 50 mm und mit offenen Makroporen von 0,1 bis 5 mm zusammengesetzt sein. Eine solche Grösse der einzelnen Stoffteilchen ergibt im Zusammenwirken mit den Makroporen eine besonders grosse Ansiedlungsfläche für die Mikroorganismen, wobei die Makroporen ein dezentralisiertes Wachstum der Bakterien, das für die Vermeidung einer Verstopfung der Poren sowie einen grossen Stoffaustausch wichtig ist, fördern.

Für eine gute Filterwirkung sowie gleichzeitig die Ausbildung einer die Biomassenkonzentration steigernden Ansiedlungsfläche besteht das eine Filterwirkung aufweisende Medium mit Vorteil aus Schaumstoff und/oder Keramik und/oder Aktivkohle und/oder Blähton. Gleichermassen vorteilhaft ist es aber auch, wenn das eine Filterwirkung aufweisende Medium aus Kunst- und/oder Naturfaserbündeln zusammengesetzt ist, wobei

beispielsweise Polyester-, Polyäthylen-, Perlon- oder Jutefaserbündeln zum Einsatz kommen können. Die Mikroorganismen finden dabei auf den einzelnen Fasern eine grosse Ansiedlungsfläche und die ungelösten und makromolekularen Inhaltsstoffe werden teilweise auf den Fasern selbst und teilweise in den zwischen den einzelnen Fasern vorhandenen Zwischenräumen abgelagert. Die Kombination mehrerer der vorgenannten Materialien oder auch die Kombination einzelner Stoffteilchen mit Faserbündeln erhöht das Zurückhalten von schwer abbaubaren Abwasserinhaltsstoffen mit unterschiedlichen Rückhalteverhalten.

Mit der durch die Abtrennung und Aufkonzentrierung der schwer abbaubaren Abwasserinhaltsstoffe und die hohe Biomassenkonzentration im ersten Reaktor mögliche Verringerung des gesamten Reaktorvolumens ist das erfindungsgemässe Verfahren besonders wirtschaftlich für die anaerobe biologische Reinigung hochkonzentrierter Industrieabwässer mit ungelösten Feststoffen und hoch molekularen Schmutzstoffen einsetzbar.

Beispielsweise ist es besonders gut geeignet für die anaerobe Reinigung von Abwässern der Obst- und Gemüseindustrie, aus Schlachthöfen und Fleischverarbeitungsfabriken, Gemüseindustrie, aus Schlachthöfen und Fleischverarbeitungsfabriken, aus Öl- und Margarinefabriken, der Milchindustrie, der Hefeindustrie sowie der chemischen Industrie.

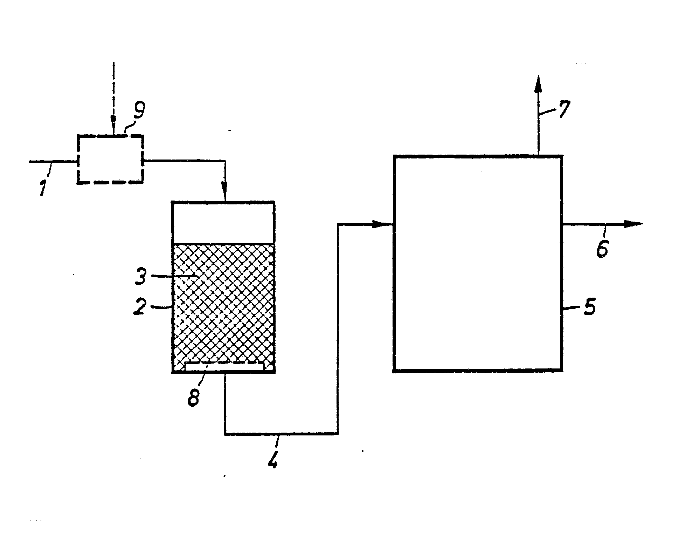

Die Erfindung wird im folgenden anhand eines in der Zeichnung schematisch dargestellten Ausführungsbeispiels näher erläutert:

Über einen Zulauf 1 wird zu behandeln des Abwasser einem ersten, unter anaeroben Bedingungen betriebenen Reaktor 2 zugeführt. In diesem ersten Reaktor 2 ist ein eine Filterwirkung aufweisendes Medium 3 vorhanden, das gleichzeitig auch als Ansiedlungsfläche für Mikroorganismen dient. Beispielsweise kann das Medium 3 dazu einzelne Stoffteilchen mit einem Durchmesser von 0,5 bis 50 mm und mit offenen Makroporen von 0,1 bis 5 mm aufweisen, wobei als geeignete Materialien Schaumstoff, Keramik, Aktivkohle oder Blähton in Frage kommen. Statt einzelner Stoffteilchen kann das Medium 3 aber auch aus einem oder mehreren Blöcken der genannten Materialien bestehen oder aus Kunst- und/oder Naturfaserbündeln zusammengesetzt sein. Zur Vermeidung des Ausschwemmens einzelner Stoffteilchen bzw. Faserbündeln ist am Ablauf des ersten Reaktors 2 ein Sieb oder ein Gitter 8 vorhanden, dessen Maschenweite geringer als die kleinste Stoffteilchengrösse ist.

Dem ersten Reaktor 2 ist über eine Verbindungsleitung 4 ein zweiter, unter anaeroben Bedingungen betriebener Reaktor 5 nachgeschaltet, dem ein Ablauf 6 für behandeltes Abwasser sowie eine Gasableitung 7 für Faulgas zugeordnet ist. Damit der erste Reaktor 2 als Festbettreaktor betrieben werden kann, ist der Zulauf 1 oben und die Verbindungsleitung 4 unten am ersten Reaktor 2 angeschlossen.

Im Zulauf 1 kann zusätzlich, wie durch gestrichelte Linien angedeutet ist, zur Unterstützung der Filterwirkung im ersten Reaktor 2 eine Zugabeeinrichtung 9 für das Einleiten von Flokkungs- und/oder Fällungs- und/oder Adsorptionsmitteln angeordnet sein.

Durch die Filterwirkung des Mediums 3, die gegebenenfalls noch durch die vorstehend erwähnten Zugabemittel verstärkt wird, werden im ersten Reaktor 2 die ungelösten und makromolekularen, schwer abbaubaren Abwasserinhaltsstoffe zurückgehalten, während die leicht abbaubaren, von vornherein bereits im gelösten Zustand vorliegenden niedermolekularen Abwasserinhaltsstoffe weitgehend ungehindert in den zweiten Reaktor 5 weitergeleitet werden. Im ersten Reaktor 2 werden die schwer abbaubaren Abwasserinhaltsstoffe durch die auf dem Medium 3 niedermolekulare Stoffe überführt und diese dann auch in den zweiten Reaktor 5 zum weiteren Abbau über einen Versäuerungs-, Acetat- und Methanbildungsphase eingeleitet.

Dabei kann der erste Reaktor 2 aufgrund der mit dem Zurückhalten der Feststoffe und makromolekularen Stoffe verbundenen Aufkonzentrierung dieser Stoffe ein kleines Volumen aufweisen.

Nachfolgend soll ein Zahlenbeispiel verdeutlichen, wie gross die Einsparung an Reaktorvolumen mit der erfindungsgemässen Verfahrensweise gegenüber einer herkömmlichen Verfahrensweise sein kann.

Bei dem Zahlenbeispiel wird ausgegangen von der Reinigung eines organisch hochbelasteten Industrieabwassers, das in einer Menge von 500 m³/Tag mit einem CSB-Gehalt von 10 000 mg/1 (=5000 kg/Tag) anfällt. Die als CSB ausgedrückte organische Fracht des Abwassers soll sich dabei zu 60% aus leicht abbaubaren Stoffen (=3000 kg $CSB_x$/Tag), zu 30% aus schwer abbaubaren Stoffen (=1500 kg $CSB_y$/Tag) und zu 10% aus nicht abbaubaren Stoffen (=500 kg $CSB_z$/Tag) zusammensetzen.

Der anaerobe Abbau erfolgt bei einem stationären Betriebszustand, d.h. die Mikroorganismen der einzelnen anaeroben Abbaustufen liegen in hoher, annähernd konstanter Konzentration vor. Für den CSB-Abbau bzw. für die Umwandlung von schwer abbaubarem CSB in leicht abbaubaren CSB gilt näherungsweise eine Reaktonskinetik erster Ordnung, die folgende Gleichung ergibt: $dCSB/dt = k \cdot CSB$; integriert:
$CSB_t = CSB_o / (1 + k \cdot t)$, wobei
$CSB_t$ = CSB im Reaktorablauf nach der Reaktionszeit t (kg/d)
$CSB_o$ = CSB im Reaktorzulauf (kg/d)
k = Geschwindigkeitskonstante erster Ordnung (1/d) für die jeweilige CSB-Abbau- oder CSB-Umwandlungsreaktion
t = Verweilzeit des CSB im Reaktor (d).

Für die Geschwindigkeitskonstanten können folgende Annahmen gemacht werden:
$k_x = 3$ (1/d) für die Umwandlung des leicht abbaubaren $CSB_x$ in $CH_4$ und $CO_2$
$k_y = 0,2$ (1/d) für die Umwandlung des schwer abbaubaren $CSB_y$ in leicht abbaubaren $CSB_x$.

Aus der vorstehenden Gleichung erster Ordnung ergibt sich bei Verwendung eines konventionellen Reaktors mit Durchsatz des Gesamtabwassers und unter der Voraussetzung, dass 90% des gesamten CSB leicht abbaubar sind, folgende Verweilzeit:

$$t_x = (CSB_{x0} - CSB_{xt}) / CSB_{xt} \times k_x = 3d$$
$$(CSB_{xz} = CSB_z)$$

Damit beträgt das erforderliche Reaktorvolumen für diesen Fall unter Berücksichtigung des Zulaufs von 500 m³/Tag 1 500 m³.

Für die Umwandlung von schwer abbaubaren $CSB_y$ in leicht abbaubaren $CSB_x$ ergibt sich aus der oben stehenden Gleichung erster Ordnung folgende Verweilzeit:

$$t_y = (CSB_y + CSB_z) - CSB_z) / CSB_{yt} \times k_y = 15 \text{ d}$$
$$(\text{wobei } CSB_{yt} = CSB_z).$$

Für die langsame Umwandlung von $CSB_y$ in $CSB_x$ ist somit ein Reaktorvolumen von 7500 m³ erforderlich.

Bei Verwendung der erfindungsgemässen Verfahrensweise kann angenommen werden, dass sich im ersten, ein Filter- und Trägermedium enthaltenden Reaktor $CSB_y + CSB_z = 2000$ kg um den Faktor 10 aufkonzentrieren. Die Konzentration steigt dann von 4000 auf 40 000 mg/l. Bei Berücksichtigung der Umwandlungszeit von $CSB_y$ in $CSB_x$ von 15 Tagen beträgt dann das Reaktorvolumen für diesen ersten Reaktor 750 m³.

Das gesamte Reaktorvolumen setzt sich somit zusammen aus 750 m³ für die Umwandlung von aufkonzentriertem $CSB_y$ in $CSB_x$ im ersten Reaktor sowie 1500 m³ für die Umwandlung von $CSB_x$ in Methan und $CO_2$ im zweiten Reaktor, was ein Gesamtvolumen von 2250 m³ und im Vergleich zum konventionellen Reaktor mit 7500 m³ eine Ersparnis an Reaktorvolumen von 70% ergibt.

**Patentansprüche**

1. Verfahren zur anaeroben biologischen Reinigung von organische Schmutzstoffe enthaltendem Abwasser, bei dem das zu reinigende Abwasser durch zwei hintereinander geschaltete, unter anaeroben Bedingungen betriebene Reaktoren geleitet wird, wobei die im Abwasser enthaltenen, unter anaeroben Bedingungen nur langsam metabolisierbaren, teils im ungelösten, teils im makromolekularen Zustand vorliegenden Schmutzstoffe im ersten Reaktor mit Hilfe eines im ersten Reaktor vorhandenen, eine Filterwirkung aufweisenden Mediums zurückgehalten werden, und wobei im ersten Reaktor die Verweilzeit der nur langsam metabolisierbaren Schmutzstoffe so bemessen wird, dass diese zu niedermolekularen, gelösten Bruchstücken abgebaut werden und wobei anschliessend die gelösten Bruchstücke zusammen mit den von vornherein schnell abbaubaren Schmutzstoffen dem zweiten Reaktor zugeführt werden, dadurch gekennzeichnet, dass die schon zum vornherein im gelösten Zustand im Abwasser vorhandenen, von anaeroben Mikroorganismen schnell abbaubaren Schmutzstoffe direkt und zumindest weitgehend ohne Umwandlung in den zweiten Reaktor weitergeleitet werden, wo deren Abbau in einer Versäuerungs-, Acetat- und Methanbildungsphase erfolgt.

2. Verfahren nach Anspruch 1, dadurch gekennzeichnet, dass als die Filterwirkung aufweisendes Medium ein Medium verwendet wird, das gleichzeitig auch als Ansiedlungsfläche für Mikroorganismen wirkt.

3. Verfahren nach Anspruch 1 oder 2, dadurch gekennzeichnet, dass der erste Reaktor als Festbett- oder Fliessbettreaktor betrieben wird.

4. Verfahren nach einem der Ansprüche 1 bis 3, dadurch gekennzeichnet, dass das Zurückleiten der langsam metaboliserbaren Schmutzstoffe unter Verwendung mindestens zweier unterschiedlich gearteter Materialien für das eine Filterwirkung aufweisende Medium durchgeführt wird.

5. Verfahren nach einem der Ansprüche 1 bis 4, dadurch gekennzeichnet, dass das Zurückhalten der langsam metabolisierbaren Schmutzstoffe durch Zugabe von Flockungs- und/oder Fällungs- und/oder Adsorptionsmitteln unterstützt wird.

6. Verfahren nach einem der Ansprüche 1 bis 5, dadurch gekennzeichnet, dass der zweite Reaktor als Hochleistungsreaktor betrieben wird.

**Revendications**

1. Procédé de purification biologique anaérobie d'eaux usées contenant des polluants organiques, selon lequel l'eau à purifier est conduite à travers deux réacteurs branchés l'un derrière l'autre, fonctionnant dans des conditions anaérobies; les polluants contenus dans les eaux usées, à métabolisation lente dans des conditions anaérobies existant partiellement à l'état non dissous, partiellement à l'état macro-moléculaire, sont retenus dans le premier réacteur à l'aide d'un milieu présentant une action filtrante existant dans le premier réacteur et le temps de séjour dans le premier reacteur des polluants ne se métabolisant que lentement étant calculé de telle sorte que ces polluants soient dégradés en fractions dissoutes de bas poids moléculaires et, ensuite, les fractions dissoutes sont amenées au deuxième réacteur en même temps que les polluants de dégradation rapide dès le départ, caractérisé en ce que les polluants, existants dès le départ a l'état dissous dans les eaux usées et de dégradation rapide par des micro-organismes anaérobies, sont acheminés directement et tout au moins dans une large mesure sans transformation dans le deuxième réacteur où a lieu leur dégradation dans une phase d'acidification et de formation d'acétate et de méthane.

2. Procédé selon la revendication 1, caractérisé en ce que, comme milieu présentant un effet filtrant, on emploie un milieu qui agit en même temps comme surface d'ensemencement de micro-organismes.

3. Procédé selon la revendication 1 ou 2, caractérisé en ce que l'on fait fonctionner le premier réacteur comme un réacteur à lit fixe ou fluidisé.

4. Procédé selon l'une quelconque des revendications 1 à 3, caractérisé en ce que la retenue des polluants longs à métaboliser est effectuée en utilisant au moins deux matériaux de nature différente comme milieu présentant un effet filtrant.

5. Procédé selon l'une quelconque des revendications 1 à 4, caractérisé en ce que la retenue des polluants longs à métaboliser est favorisée par l'addition d'agents de floculation et/ou de précipitation et/ou d'adsorption.

6. Procédé selon l'une quelconque des revendications 1 à 5, caractérisé en ce que l'on fait fonctionner le deuxième réacteur comme un réacteur à rendement élevé.

**Claims**

1. A process for the anaerobic biological purification of sewage containing organic pollutants, in which the sewage which is to be purified is led through two reactors connected in series which are operated under anaerobic conditions, where the pollutants contained in the sewage which metabolise only slowly under anaerobic conditions and which occur partially in the undissolved state and partially in the macro-molecular state, are retained in the first reactor by a medium present in the first reactor which has a filtering action, where the dwell time in the first reactor of the pollutants which metabolise only slowly is arranged to be such that these are broken-down to form low-molecular weight, dissolved fragments, and where the dissolved fragments are then fed to the second reactor, together with the pollutants which from the start break down rapidly, characterised in that the pollutants which are present from the start in the dissolved state in the sewage and which can easily be broken down by anaerobic micro-organisms are fed directly, and at least to a large extent without conversion, into the second reactor in which they are broken down in an acidification-, acetate- and methane forming phase.

2. A process as claimed in Claim 1, characterised in that a medium which simultaneously serves as a settling surface for micro-organisms is used as the medium which has a filtering action.

3. A process as claimed in Claim 1 or Claim 2, characterised in that the first reactor is operated as a fixed bed reactor or a moving bed reactor.

4. A process as claimed in one of Claims 1 to 3, characterised in that the retention of the pollutants which can be metabolised only slowly is achieved by the use of at least two different types of material as the medium which has the filtering action.

5. A process as claimed in one of Claims 1 to 4, characterised in that the retention of the pollutants which can be metabolised only slowly is assisted by the addition of flocculation and/or precipitation and/or adsorption means.

6. A process as claimed in one of Claims 1 to 5, characterised in that the second reactor is operated as a high-power reactor.

− 1/1 −